(19) Europäisches Patentamt
European Patent Office
Office européen des brevets

(11) Publication number: **0 548 412 A1**

# EUROPEAN PATENT APPLICATION

(21) Application number: **91203397.4**

(22) Date of filing: **20.12.91**

(51) Int. Cl.5: **C08L 95/00**

(43) Date of publication of application:
**30.06.93 Bulletin 93/26**

(84) Designated Contracting States:
**AT BE CH DE DK ES FR GB IT LI NL SE**

(71) Applicant: **POLY INVEST SA**
**37, rue Notre-Dame**
**Luxembourg(LU)**

(72) Inventor: **Luc, Mathieu**
**Vandermarckestraat**
**B-3560 Lummen(BE)**
Inventor: **Pagnini, Dante**
**Via G. B. Angioletti, 1**
**I-20151 Milano (MI)(IT)**
Inventor: **Torti, Luigi**
**Via Arrigo Boito, 12**
**I-20052 Monza (MI)(IT)**

(74) Representative: **Trupiano, Roberto**
**BREVETTI EUROPA S.r.l. Piazza Bernini, 6**
**I-20133 Milano (MI) (IT)**

(54) **Modified bitumen usable within a wide temperature range, and process for preparing it.**

(57) Modified bitumen usable within a wide temperature range, and particularly resistant to aging, obtained by modifying bitumen with a ionomeric polymeric product, in which the bonds are of ionic type.
Process for preparing said modified bitumen.

EP 0 548 412 A1

The present invention relates to modified bitumens useable within a wide temperature range, and particularly resistant to ageing, as well as to the process for preparing them.

It is well known that bitumens are materials mainly constituted by hydrocarbons, which may be either associated, or not, with other substances and are used, analogously to natural asphalts, to accomplish impermeable coatings or layers, floor surfaces, roof coverings, and the like. The layers, and, in general, surfaces, based on bitumen, should show high resistance to high, as well as low, temperatures, should display a high elasticity degree and should have a long useful life without undergoing alterations or decay, due to ageing or the like.

In order to improve the characteristics of bitumens, modifying agents with a polymeric base are used, which are added to bitumen, with the so-called "modified bitumens" being thereby obtained.

For example, bitumens modified with amorphous polyalpha-olefins (usually designated as "APO" or "APAO") are known, which display extremely good characteristics at high temperatures, but supply only limited performances at low temperatures, display low elasticity characteristics, and undergo ageing. These APAO-modified bitumens are normally produced by admixing bitumen with an amorphous, high-molecular-weight ethylene-propylene copolymer in combination with isotactic polypropylene, in order to improve the high-temperature characteristics of the resulting products, and with a low-molecular-weight polyolefin, usually an atactic propylene homopolymer (APP/H), as a viscosity regulating agent and in order to improve the compatibility of the products. It was observed that the decay of the characteristics of these APAO-modified bitumens, with high-temperature ageing in the presence of air, is mainly due to phenomenons of physical character.

Another widely used bitumen type known from the prior art is constituted by bitumen modified with styrene-butadiene-styrene block copolymers (SBS), which so-modified bitumen displays fairly high characteristics of high-temperature resistance, very good characteristics at low temperatures and good elastic behaviour, but undergoes ageing in the presence of oxidizers; such an ageing is to be mainly attributed to the decay of the polymeric chains, and to the consequent decrease in polymer's molecular weight.

Other modified bitumens are obtained by using other polymeric materials soluble in bitumen, such as, e.g., ethylene/vinyl acetate copolymers (EVA), but the latter result to be excessively expensive relatively to the improvement in properties which can be obtained in that way in the resulting modified bitumen.

A purpose of the present invention is of providing modified bitumens which are particularly resistant to ageing and display high resistance characteristics both at high and low temperatures, i.e., which can be advantageously used within a wide temperature range, while simultaneously retaining, within the limit of a correct use, their characteristics of flexibility and elasticity.

Another purpose of the instant invention is providing a modified bitumen produced by means of modifiers which are easily available in large amounts from the market.

A further purpose of the instant finding is of providing a process for preparing the modified bitumens according to the present invention.

Still a further purpose of the invention is of providing modified bitumens endowed with improved characteristics, which can be submitted to treatments and processings such as usually employed, without that the existing facilities, and the processes currently carried out, have to be substantially modified.

These and still further purposes, and the relevant advantages, which are evidenced by the following disclosure, are achieved by a bitumen modified by the addition of polymeric materials, which modified bitumen, according to the present invention, comprises:
- a bitumen essentially constituted by a mixture of hydrocarbons, either deriving from petroleum distillation, as the residue thereof, or of natural origin, and/or from analogous materials, such as asphalt, pitch, and so forth;
- at least one ionomeric polymeric product in which the bonds are of ionic type, obtained by means of the introduction of polar functional groups in a base material of polymeric nature, and subsequent ionomerization by means of substances suitable for salifying said functional groups;
- plasticizers, fillers and various additives, of known type.

The polymeric base product used to obtain said ionomeric polymeric product is constituted by all, either amorphous or crystalline, polymers anyway obtained as byproducts from other processes, or also by direct synthesis, which are soluble in bitumen, in particular poly-alpha-olefins (PAO), such as atactic homopolymer polypropylene (APP/H), atactic propylene-ethylene copolymer (APPE), ethylene-propylene-butene terpolymers, ethylene-propylene-hexene terpolymers, ethylene-propylene-octene terpolymers, ethylene-vinyl acetate copolymers (EVA), low-density polyethylene (LDPE), linear, low-density polyethylene (LLDPE), high-density polyethylene (HDPE), low-molecular-weight, low-density polyethylene (LDPE waxes), low-molecular-weight, high-density polyethylene (HDPE waxes) isotactic polypropylene (IPP homopolymer), isotactic ethylene-propylene copolymer (IPP copolymer), ethylene-propylene copolymers (EPM), (either isotactic or amorphous) polybutene, polyisobutylene, copolymers and terpolymers containing reactive double bonds, such as isobutylene-isoprene rubbers (IIR) , ethylene-propylenediene terpolymers (EPDM), styrene-butadiene block polymers (SBS).

Said polar functional groups which are introduced into said polymeric base product can be advantageously constituted by carboxy groups, dicarboxy acid anhydrides, sulfonic groups, chlorosulfonic groups and epoxy groups.

As substances capable of salifying said functional groups, aromatic and aliphatic amines and quaternary ammonium salts, metal oxides and metal hydroxides, metal salts of organic carboxy acids, alcohols, alkali and alkaline-earth metal carbonates, aminoalcohols, epoxides are advantageously used.

The amounts and the mutual ratios of the various components which constitute the modified bitumen according to the present invention may vary according to the type of bitumen used and of the ionomeric polymeric product used, as well as according to the type and conditions of use of said modified bitumen. In general, the modified bitumen according to the present invention preferably contains the following amounts of constituents, expressed as % by weight, based on the total weight of modified bitumen:

| * bitumen | from 40 to 95 % |
| * ionomeric polymeric product | from 5 to 60 % |
| * plasticizers, fillers and various additives | balance to 100 % |

The process for preparing the modified bitumen according to the present invention, comprises the following steps:
- melting the polymeric base material and introducing, when hot, the polar functional groups, so as to obtain a functionalized polymer;
- heating bitumen to a temperature of 170-210°C;
- adding to heated bitumen said functionalized, high-temperature-conditioned polymer, so as to obtain a bitumen containing said functionalized polymer, homogeneously dissolved and/or distributed;
- adding to said functionalized-polymer-containing bitumen a substance capable of salifying said polar functional groups, and transforming said functionalized polymer into a corresponding crosslinked ionomeric polymeric product dissolved and/or homogeneously dispersed in same bitumen, with bitumen modified with an ionomeric polymeric modifier being obtained.

Another process for preparing the modified bitumen according to the present invention comprises the following steps:
- melting the polymeric base material and introducing, when hot, the polar functional groups, so as to obtain a functionalized polymer;
- adding to said functionalized polymer a substance capable of salifying said polar functional groups, and transforming said functionalized polymer into a corresponding crosslinked ionomeric polymeric product;
- heating bitumen to a temperature of 170-210°C;
- adding to said heated bitumen said crosslinked ionomeric polymer, and high-temperature conditioning the blend, so as to obtain a modified bitumen containing said functionalized polymer, homogeneously dissolved and/or distributed.

The plasticizers, possible fillers and/or other additives of known type, performing different functions, can be added in the different steps of both above processes, according to the type of additive and of its specific function.

It was observed that the modified bitumen according to the present invention displays considerably improved characteristics of elasticity, as compared to the modified bitumens known from the prior art, as well as a better resistance to high-temperature ageing; and, furthermore, that it can be advantageously used within a wider temperature range, of from at least -20°C up to +155°C, as it is evident from the following examples of practical embodiments, supplied for merely exemplifying, non-limitative purposes, and, in particular, from the summarizing table in which in columns "A" and "B" the results are reported, which were obtained with a modified bitumen according to the prior art, and respectively with a bitumen modified, according to the present invention, with a polymeric product converted into a ionomeric one by means of the formation of bonds of ionic type, obtained from a polymeric base product which was the same as used for the corresponding modified bitumen according to the prior art.

The samples of modified ionomeric bitumen are subdivided into two groups.

One group is characterized immediately, and the other one is charged to an air-circulation oven and is kept at the temperature of 80°C for 28 days, and thereafter is characterized as well.

## Summarizing Table

|  | Example 4 | | Example 5 | | Example 6 | |
|---|---|---|---|---|---|---|
|  | A | B | A | B | A | B |
| Viscosity | 850 | 2 800 | — | — | 600 | 1 900 |
| **Initial characteristics** |  |  |  |  |  |  |
| Penetration at 25°C (ASTM D5) | 55 | 36 | — | — | 60 | 45 |
| Penetration at 60°C (ASTM D5) | >240 | 110 | — | — | >240 | 160 |
| Softening temperature (R&B) (ASTM D 2398), °C | 150 | 153 | — | — | 145 | 150 |
| Low-temperature flexibility (DIN 52 123), °C | -17.5 | -20 | +5 | -5 | -15 | -20 |
| Elongation at break, % | 100 | 250 | — | 150 | 100 | 200 |
| Elastic recovery, % | 10 | 40 | — | 25 | 5 | 25 |
| **Characteristics after a 4 weeks storage in air circulation oven at 80°C** |  |  |  |  |  |  |
| Penetration at 25°C (ASTM D5) | 50 | 32 | — | — | 55 | 38 |
| Penetration at 60°C (ASTM D5) | 210 | 100 | — | — | >240 | 130 |
| Softening temperature (R&B) (ASTM D 2398), °C | 155 | 155 | — | — | 148 | 153 |
| Low-temperature flexibility (DIN 52 123), °C | +5 | -15 | +15 | 0 | -5 | -15 |

Values not reported are non-meaningful or non-measurable data. Elongation at break and elastic recovery were measured according to the following procedures:

Elongation at break

A sample of 100 x 50 x 40 mm is charged to an INSTRON dynamometer and is stretched at the speed of 100 mm/minute, until it breaks. The test is carried out at 25°C.

Elastic recovery:

A sample of 20 cm x 50 cm x 4 mm is stretched on a graduated teflon plane, at the elongation speed of 100 mm/minute, up to twice its original length. After a period of loading of 10 minutes, during which the deformation of 100% is maintained, the sample is cut in the middle. One hour after cutting, the lengths "x" and "Y" of both half samples are measured (in cm). The elastic recovery (E.R.) is then calculated according to the formula:

E.R. = (40-X-Y) x 100/20.

Example 1

Preparation of a functionalized polymer blend.

The following polymers are charged to Z-mixer (UTV Model MX2), equipped with a mixing unit of stainless steel of 2 litres of volume, with the possibility of operating under an inert atmosphere, and kept heated with diathermic oil at the temperature of 170-180°C:

| - APP/H | Atactic polypropylene homopolymer | 300 g (30%) |
| - APP/E | Atactic polypropylene/ethylene copolymer | 450 g (45%) |
| - LDPE | Low-density polyethylene | 80 g ( 8%) |
| - EVA | Ethylene/vinyl acetate copolymer | 40 g ( 4%) |
| - IPP | Isotactic polypropylene | 100 g (10%) |
| - EPR | Ethylene/propylene rubber | 20 g ( 2%) |
| - IIR | Isobutylene/isoprene rubber | 10 g ( 1%) |

The mixing chamber is sealed, and inside it a nitrogen stream of 150 ml/minute is caused to flow. After 30 minutes, the lower-melting components are molten and then the stirrer is started at the revolution speed of 30 revolutions per minute. Thirty minutes later, the polymers are completely molten and a homogeneous mixture is obtained.

Now, 1.9 parts % by weight is added of a mixture constituted by 50% of maleic anhydride (MAH), 30% of tricresyl phosphate and 20% of an organic peroxide, such as, e.g., 2,5-dimethyl-2,5-bis-(tert.-butylperoxy)-hexane (Trigonox 101).

The resulting compound is kept stirred for 60 minutes, still under an inert nitrogen blanketing atmosphere.

The functionalized polymeric blend, in the molten state, is then discharged into, and allowed to solidify inside a metal container.

The functionalized copolymer is characterized by determining the following properties thereof:

| - Viscosity at 180°C (Haake RV20) (shear rate 16 sec$^{-1}$) | 250 Pa.s |
| - Penetration at 25°C (ASTM D5) | 20 |
| - Penetration at 60°C (ASTM D5) | 42 |
| - Softening temperature (R&B) (ASTM D 2398) | 150 °C |
| - Grafted maleic anhydride (FTIR spectroscopy) | 0.7 % |

The composition of the mixture of polymers charged to the blade mixer can be comprised within the following range of values:

| - APP/H | 0-50 % |
|---------|--------|
| - APPE  | 0-90 % |
| - LDPE  | 0-25 % |
| - EVA   | 0-20 % |
| - IPP   | 0-30 % |
| - EPR   | 0-10 % |
| - IIR   | 0-10 % |

The grafted amount of maleic anhydride can range from 0.1 to 3% .

Example 2

Preparation of a functionalized polymer blend

The following products are charged to Z-mixer (UTV Model MX2), equipped with a mixing unit of stainless steel of 2 litres of volume, with the possibility of operating under an inert atmosphere, and kept heated with diathermic oil at the temperature of 170-180°C:

| - LDPE waxes                       | 225 g (15%) |
|------------------------------------|-------------|
| - Plasticizers (Shellflex 790 HP)  | 75 g ( 5%)  |
| - APP/H                            | 615 g (41%) |
| - EPR                              | 225 g (15%) |
| - IPP                              | 240 g (16%) |
| - HDPE                             | 15 g ( 1%)  |
| - EVA                              | 105 g ( 8%) |

The mixing chamber is sealed, and a nitrogen stream of 150 ml/minute is caused to flow through its interior.

After 30 minutes, the lower-melting components are molten and then the stirrer is started at the speed of 40 revolutions per minute.

Thirty minutes later, the polymers are completely molten and a homogeneous mixture is obtained.

Now, 1.5 parts % by weight is added of a mixture constituted by 40% of maleic anhydride (MAH), 30% of N,N-dimethylacetamide, 30% of an organic peroxide, such as, e.g., alpha-alpha-bis-tert.-butyl-peroxydiisopropyl-benzene (VULCUP-R).

Stirring is continued for a further 60 minutes to cause the reaction to proceed to completion.

The functionalized polymeric blend, in the molten state, is then discharged into, and allowed to solidify, inside a metal container.

The blend is characterized as disclosed in Example 1, and the following values are obtained:

| - Viscosity at 180°C (Haake RV20, shear rate 16 $sec^{-1}$) | 400 Pa.s |
|-------------------------------------------------------------|----------|
| - Penetration at 25°C (ASTM D5)                             | 15       |
| - Penetration at 60°C (ASTM D5)                             | 39       |
| - Softening temperature (R&B) (ASTM D 2398)                 | 165 °C   |
| - Grafted maleic anhydride (FTIR spectroscopy)              | 0.6 %    |

The formulation may be comprised within the following range of values:

| - LDPE waxes | 0-60 % |
|---|---|
| - Plasticizers | 0-35 % |
| - APP/H | 0-50 % |
| - EPR | 5-25 % |
| - IPP | 5-25 % |
| - HDPE | 0-15 % |
| - EVA | 0-10 % |

Example 3

Ionomerization of a functionalized blend of polymers, in order to obtain an ionomeric copolymer

The preparation disclosed in Example 1 is treated according to the following procedure:
One part % of manganese acetate, by weight, is added to the functionalized polymers in the molten state before the latter are discharged, and the resulting mixture is kept stirred until the initial release of water and acetic acid decreases (20 minutes).

The polymer is then discharged into a metal container, and is allowed to solidify. The following properties are determined:

| - Viscosity at 180°C (Haake RV20, shear rate 16 sec$^{-1}$) | 340 Pa.s |
|---|---|
| - Penetration at 25°C (ASTM D5) | 17 |
| - Penetration at 60°C (ASTM D5) | 35 |
| - Softening temperature (R&B) (ASTM D 2398) | 175 °C |

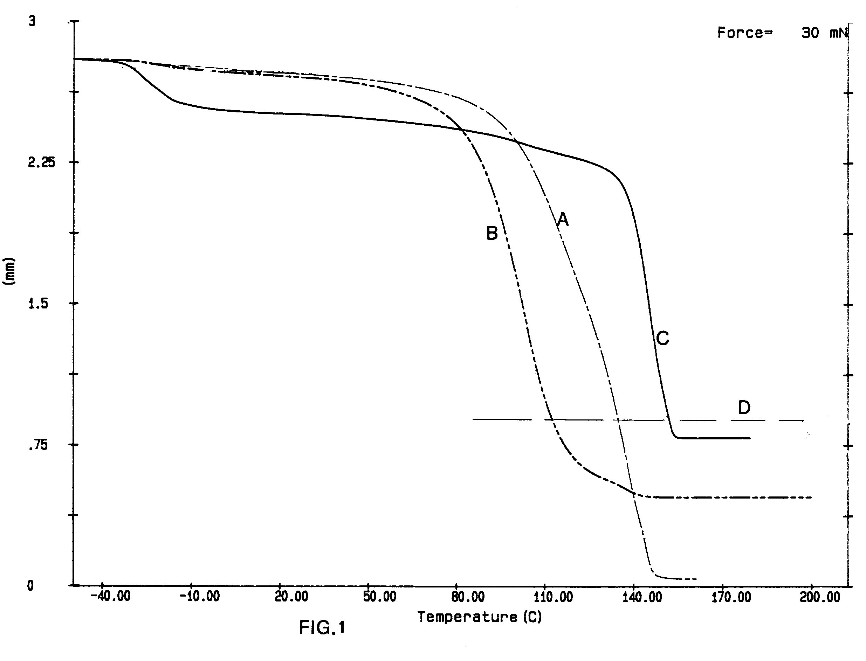

The ionomeric functionalized copolymer obtained according to the present example is further characterized by measuring the penetration thereof under constant load as a function of temperature, as displayed in Figure 1.

In Figure 1, the residual thickness of the specimen constituted by the ionomeric functionalized copolymer obtained according to the present example, under the end point reached by the top of the probe of the instrument used for the measurement , during the penetration step, is reported as a function of temperature. To the probe of said instrument, a constant load force of 30 mN is applied. The line "A" is the line relevant to the blend of base polymers taken as the reference, "B" is the line relevant to the functionalized blend of polymers obtained as disclosed in Example 1, and "C" is the line relevant to the blend of ionomeric polymers obtained according to Example 3. "D" is the sensibility threshold of the instrument.

Example 4

Preparation of a modified bitumen according to the invention, by mixing bitumen with functionalized polymers and subsequent ionomerization in the end mixture

800 g of bitumen with a penetration value of 200 is weighed in a metal container equipped with stirring means.

Said bitumen is heated up to the temperature of 180-190°C, and then 200 g of polymer as disclosed in Example 1 is added as small portions. The resulting compound is heated, with temperature being kept constant for approximately one hour, until the polymer is completely dissolved in bitumen.

A sample of product is collected, and is examined by means of a fluorescence microscope.

If the polymer is completely dissolved, under the microscope a continuous, fluorescent phase of polymer can be observed, together with small residual particles of bitumen.

At this time, the amount of 0.5% of Ca(OH)$_2$ is added, and stirring is continued for a further hour.

The compound is then discharged and cast to yield a sheet of 3 mm of thickness.

To facilitate testing, the sheets should have a size of from 5 to 20 cm.

The modified bitumen is then characterized. The resulting values are shown in Table 1.

The content of polymer can range from 5 to 35% by weight, relatively to bitumen. The reactant content can range from 0 to 5 parts % by weight, according to its characteristics.

Example 5

Preparation of a modified bitumen according to the invention, by means of the addition to bitumen of an ionomeric copolymer

920 g of B100 bitumen is charged to a metal vessel equipped with stirring means, and is heated up to the temperature of 180-190°C.

With stirring, 80 g is added as small-size pieces of the modified polymeric blend obtained according to Example 3.

The resulting compound is kept at 180-200°C until the polymer is completely dissolved (60 minutes).

When a sample of product shows, under the fluorescence microscope, a jellow-coloured, continuous polymeric phase, the compound is discharged and cast into strips of 20 x 5 cm, of 3 mm of thickness.

The characterization of such a product is reported in Table 1.

The contents of polymers can range from 5 to 35% by weight, relatively to bitumen.

Example 6

Preparation of a modified bitumen according to the invention, by mixing bitumen with functionalized polymers,and subsequently carrying out the ionomerization in the end blend

800 g of B200 bitumen is charged to a metal vessel equipped with stirring means, and is heated up to 180-190°C. 60 g of low viscosity APP/H is added as small pieces.

Subsequently, 140 g of polymer obtained according to Example 2 is added as small pieces.

The resulting compound is kept at the temperature of 180-190°C with continuous stirring, until the polymer is completely dissolved (60 minutes).

0.1% of $Pb(CH_2COO)_2$ is added, and the compound is kept stirred for a further 60 minutes.

The product is then cast to yield sheets of 20 x 5 cm and of 3 mm of thickness, which are used for the characterization reported in Table 1.

Example 7

Preparation of a modified bitumen according to the prior art, by mixing bitumen with a blend of polymers, in order to obtain a reference bitumen.

The preparation is described of bitumens modified with base polymers, in order to obtain reference compounds used for the characterizations.

An amount of already described bitumen type (either B 200 or B 100) is weighed inside a metal container, as reported in Examples 4, 5 and 6.

Bitumen is then heated, with stirring, up to the temperature of approximately 180°C.

To bitumen, a total amount is added, as set forth in Examples 4, 5 and 6, of polymers obtained as described in Examples 1, 2 and 3.

The temperature is kept at a value comprised within the range of from 180 to 190°C for 90 minutes, with the compound being always kept stirred.

After this time period, the product is discharged and cast in order to yield sheets as described in Examples 4, 5 and 6.

**Claims**

1. Bitumen modified with polymeric materials, characterized in that it comprises:
   - a bitumen essentially constituted by a mixture of hydrocarbons, either deriving from petroleum distillation, as the residue thereof, or of natural origin, and/or from analogous materials, such as asphalt, pitch, and so forth;
   - at least one ionomeric polymeric product in which the bonds are of ionic type, obtained by means of the introduction of polar functional groups in a polymeric base material and subsequent ionomerization by means of substances suitable for salifying said functional groups;
   - plasticizers, fillers and various additives, of known type.

8

EP 0 548 412 A1

2. Modified bitumen according to claim 1, characterized in that said polymeric base product is constituted by one or more products selected from the group consisting of amorphous or crystalline polymers anyway obtained as byproducts from other processes, or also by direct synthesis, soluble in bitumen, such as poly-alpha-olefins, copolymers and terpolymers containing reactive double bonds, such as isobutylene-isoprene rubbers, ethylene-propylene-diene terpolymers, styrene-butadiene block polymers.

3. Modified bitumen according to claim 2, characterized in that said poly-alpha-olefins comprise atactic homopolymer polypropylene, atactic propylene-ethylene copolymer, ethylene-propylene-butene terpolymers, ethylene-propylene-hexene terpolymers, ethylenepropylene-octene terpolymers, ethylene-vinyl acetate copolymers, low-density polyethylene, linear, low-density polyethylene, high-density polyethylene, low-molecular-weight, low-density polyethylene, low-molecular-weight, high-density polyethylene, isotactic polypropylene, isotactic ethylene-propylene copolymer, ethylene-propylene copolymers, (either isotactic or amorphous) polybutene, polyisobutylene.

4. Modified bitumen according to claim 1, characterized in that said polar functional groups are constituted by one or more groups selected from among carboxy groups, dicarboxy acid anhydrides, sulfonic groups, chlorosulfonic groups, epoxy groups.

5. Modified bitumen according to claim 1, characterized in that said substances capable of salifying said functional groups are selected from among aromatic and aliphatic amines and quaternary ammonium salts, metal oxides and hydroxides, alkali and alkaline-earth metal carbonates, the metal salts of organic carboxy acids, alcohols, aminoalcohols, epoxides.

6. Modified bitumen according to claim 1, characterized in that it comprises the following amounts of constituents, expressed as % by weight, as referred to the total weight of modified bitumen:

| * bitumen | from 40 to 95 % |
| * ionomeric polymeric product | from 5 to 60 % |
| * plasticizers, fillers and various additives | balance to 100 % |

7. Process for preparing modified bitumen according to claim 1, characterized in that it comprises the following steps:
   - melting the polymeric base material and introducing, when hot, the polar functional groups, so as to obtain a functionalized polymer;
   - heating bitumen to a temperature of 170-210°C;
   - adding to heated bitumen said functionalized, high-temperature-conditioned polymer, so as to obtain a bitumen containing said functionalized polymer, homogeneously dissolved and/or distributed;
   - adding to said functionalized-polymer-containing bitumen a substance capable of salifying said polar functional groups, and transforming said functionalized polymer into a corresponding crosslinked ionomeric polymeric product dissolved and/or homogeneously dispersed in same bitumen, with a modified bitumen with ionomeric polymeric modifier being obtained.

8. Process for preparing modified bitumen according to claim 1, characterized in that it comprises the following steps:
   - melting the polymeric base material and introducing, when hot, the polar functional groups, so as to obtain a functionalized polymer;
   - adding to said functionalized polymer a substance capable of salifying said polar functional groups, and transforming said functionalized polymer into a corresponding crosslinked ionomeric polymeric product;
   - heating bitumen to a temperature of 170-210°C;
   - adding to said heated bitumen said crosslined, ionomeric polymeric product, and high-temperature conditioning the blend, so as to obtain a modified bitumen containing said ionomeric polymer, homogeneously dissolved and/or distributed.

9

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 329 836 (THE FIRESTONE TIRE & RUBBER CO.) <br> * claims 1,4-7 * | 1-3 | C08L95/00 |
| | ----- | | |
| | | | **TECHNICAL FIELDS SEARCHED (Int. Cl.5 )** |
| | | | C08L |

The present search report has been drawn up for all claims

| Place of search | Date of completion of the search | Examiner |
|---|---|---|
| THE HAGUE | 03 AUGUST 1992 | BEYSS E. |